# EUROPEAN PATENT APPLICATION

(11) **EP 4 425 985 A1**
(43) Date of publication of application: **04.09.2024**
(21) Application number: 21962457.4
(22) Date of filing: 29.10.2021
(51) Int. Cl.: H04W 16/28, H04W 72/04

(54) **TERMINAL, RADIO COMMUNICATION METHOD, AND BASE STATION**

(71) Applicant: NTT DOCOMO, INC., Chiyoda-ku Tokyo 100-6150 (JP)
(72) Inventor: MATSUMURA, Yuki, Tokyo 100-6150 (JP); ECHIGO, Haruhi, Tokyo 100-6150 (JP); SHIBAIKE, Naoya, Tokyo 100-6150 (JP); NAGATA, Satoshi, Tokyo 100-6150 (JP)
(74) Representative: Hoffmann Eitle
(86) International application number: PCT/JP2021/040006
(87) International publication number: WO 2023/073915

(57) **Abstract**

A terminal according to one aspect of the present disclosure includes: a receiving section that receives one reference signal among a plurality of reference signals transmitted by using respective different resources; and a control section that controls reception of two or more reference signals among the plurality of reference signals, based on a result of reception of the one reference signal. The number of the plurality of reference signals is larger than 64. According to one aspect of the present disclosure, coverage can be improved in consideration of overhead.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

Studies are made to improve coverage in future radio communication systems (for example, NR).

However, when beams are made narrower / the number of beams is increased for coverage improvement, overhead increases, which may degrade communication throughput.

Thus, an object of the present disclosure is to provide a terminal, a radio communication method, and a base station that can improve coverage in consideration of overhead.

### Solution to Problem

A terminal according to one aspect of the present disclosure includes: a receiving section that receives one reference signal among a plurality of reference signals transmitted by using respective different resources; and a control section that controls reception of two or more reference signals among the plurality of reference signals, based on a result of reception of the one reference signal, wherein the number of the plurality of reference signals is larger than 64.

### Advantageous Effects of Invention

According to one aspect of the present disclosure, coverage can be improved in consideration of overhead.

### Brief Description of Drawings

[FIG. 1] FIGS. 1A and 1B show examples of beams and coverages.
[FIG. 2] FIGS. 2A and 2B show examples of an SSB multiplexing method.
[FIG. 3] FIGS. 3A and 3B show examples of a group multiplexing method.
[FIG. 4] FIG. 4 shows an example of reception operation A.
[FIG. 5] FIG. 5 shows an example of reception operation B.
[FIG. 6] FIG. 6 shows an example of frequency hopping of measurement targets.
[FIG. 7] FIGS. 7A and 7B show examples of periodicity of SSBs.
[FIG. 8] FIG. 8 shows an example of beams in a cell.
[FIG. 9] FIG. 9 shows an example of selection method 1.
[FIG. 10] FIGS. 10A and 10B show examples of selection method 2.
[FIG. 11] FIGS. 11A and 11B show other examples of selection method 2.
[FIG. 12] FIGS. 12A and 12B show examples of measurement targets based on operations B and A.
[FIG. 13] FIGS. 13A and 13B show examples of reception based on operations B and A.
[FIG. 14] FIG. 14 shows an example of indication based on a value of a particular field.
[FIG. 15] FIGS. 15A and 15B show examples of measurement targets based on groups A and B.
[FIG. 16] FIGS. 16A and 16B show examples of reception based on groups A and B.
[FIG. 17] FIG. 17 is a diagram to show an example of a schematic structure of a radio communication system according to one embodiment.
[FIG. 18] FIG. 18 is a diagram to show an example of a structure of a base station according to one embodiment.
[FIG. 19] FIG. 19 is a diagram to show an example of a structure of a user terminal according to one embodiment.
[FIG. 20] FIG. 20 is a diagram to show an example of a hardware structure of the base station and the user terminal according to one embodiment.
[FIG. 21] FIG. 21 is a diagram to show an example of a vehicle according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a given signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a given control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS having a TCI state with QCL type X may mean an RS having a relationship of QCL type X with (a DMRS of) a given channel/signal, and this RS may be referred to as a QCL source having the TCI state with QCL type X.

### (Initial Access Procedure)

In an initial access procedure, a UE (RRC_IDLE mode) performs reception of an SS/PBCH block (SSB), transmission of Msg.1 (PRACH / random access preamble / preamble), reception of Msg.2 (PDCCH, PDSCH including a random access response (RAR)), transmission of Msg.3 (PUSCH scheduled by RAR UL grant), and reception of Msg.4 (PDCCH, PDSCH including a UE contention resolution identity). Thereafter, when the UE transmits ACK for Msg.4 via a base station (network), RRC connection is established (RRC_CONNECTED mode).

Reception of an SSB includes PSS detection, SSS detection, PBCH-DMRS detection, and PBCH reception. In the PSS detection, detection of part of physical cell IDs (PCIs), detection (synchronization) of OFDM symbol timing, and (coarse) frequency synchronization. The SSS detection includes detection of physical cell IDs. The PBCH-DMRS detection includes detection of (part of) SSB indices in a half radio frame (5 ms). The PBCH reception includes detection of a system frame number (SFN) and radio frame timing (SSB index), reception of configuration information for remaining minimum system information (RMSI, SIB1) reception, and recognition of whether the UE can camp on the cell (carrier).

An SSB is of a band of 20 RBs and time corresponding to four symbols. Transmission periodicity of the SSB can be configured to be one from among {5, 10, 20, 40, 80, 160} ms. In a half frame, a plurality of symbol locations of the SSB are defined, based on a frequency range (FR1, FR2).

A PBCH includes a payload of 56 bits. In periodicity of 80 ms, N repetitions of a PBCH are transmitted. N depends on the SSB transmission periodicity.

System information is constituted of an MIB carried by a PBCH, RMSI (SIB1), and other system information (OSI). SIB1 includes a RACH configuration and information for performing a RACH procedure. The relationship of time/frequency resources between the SSB and a PDCCH monitoring resource for SIB1 is configured by the PBCH.

A base station using beam correspondence transmits a plurality of SSBs by using a plurality of respective beams in each SSB transmission periodicity. The plurality of SSBs have a plurality of respective SSB indices. The UE that has detected one SSB transmits a PRACH in an RACH occasion associated with the SSB index of the SSB and receives an RAR in an RAR window.

### (Beams and Coverages)

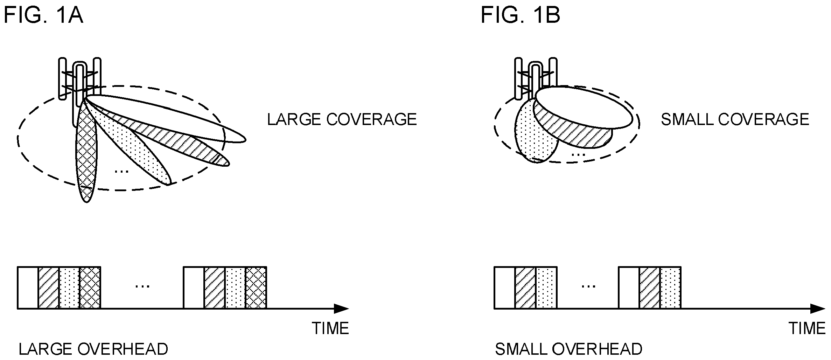

In a high frequency band, coverages are made small unless beamforming is performed on a synchronization signal / reference signal, which makes a UE difficult to discover a base station. In contrast, when beamforming is performed on a synchronization signal / reference signal to ensure coverage, this enables a strong signal to reach in a particular direction while making a signal less likely to reach in other directions (FIG. 1A). When a base station before establishing connection with the UE is not sure about the direction in which the UE is present, it is not possible to transmit a synchronization signal / reference signal by using a beam only in an appropriate direction. A method in which a base station transmits a plurality of synchronization signals / reference signals with beams of different directions to recognize which beam the UE has discovered is conceivable. When thin (narrow) beams are used for coverage, this requires transmission of a number of synchronization signals / reference signals and consequently increases overhead, which may degrade communication throughput.

When thick (wide) beams are used to reduce the number of beams (synchronization signals / reference signals) for reduction of overhead, this makes the coverage small (FIG. 1B).

It is conceivable that use of frequency bands such as millimeter waves and terahertz waves further advances in future radio communication systems (for example, 6G). It is conceivable to use a number of thin beams for construction of an area/coverage of a cell, to thereby provide communication services.

It is conceivable to expand an area by using existing FR2 and use a higher frequency band than that of existing FR2. To achieve these, improvement of beam management is preferable in addition to multi-TRP, reconfigurable intelligent surface (RIS), and the like.

In current 5G NR, the maximum number of synchronization signal blocks (SSBs) is 64. Since the area (plane) of the cell need be covered by using a maximum of 64 beams, it is difficult to use thin beams. To use a number of thin beams, beam management methods 1 and 2 below are conceivable.

### {Beam Management Method 1}

More than 64 SSBs are used (the maximum number of SSBs exceeds 64). Simply increasing the number of SSBs may cause an increase of SSB overhead / initial access delay.

### {Beam Management Method 2}

Up to 64 SSBs are used (the maximum number of SSBs is 64). The area (plane) covered by one cell/sector is made small. Problems of inter-cell/sector interference, inter-cell/inter-sector highspeed/frequent handover may occur.

Thus, the inventors of the present invention came up with the idea of a method for reducing overhead / initial access delay.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may be interpreted as "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, downlink control information (DCI), uplink control information (UCI), or the like.

In the present disclosure, an index, an identifier (ID), an indicator, and a resource ID may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, the index of an SSB/CSI-RS and a beam index may be interchangeably interpreted.

### (Radio Communication Method)

In each of the embodiments, an SSB, a CSI-RS, a DL-RS, a beam, and a TCI state may be interchangeably interpreted.

In each of the embodiments, a period, a frame, a subframe, a slot, and a symbol may be interchangeably interpreted.

In each of the embodiments, a group, a set, a measurement-target SSB/CSI-RS, a particular SSB/CSI-RS, and a particular reference signal (RS) may be interchangeably interpreted.

In each of the embodiments, the number of SSBs/CSI-RSs may be different from an existing number of SSBs/CSI-RSs, may be larger than an existing number of SSBs/CSI-RSs, or may be larger than 64.

### <First Embodiment>

This embodiment relates to an SSB structure.

### <<Aspect 1-1»

This aspect relates to multiplexing of a plurality of SSBs. A plurality of SSBs may be transmitted periodically. Different beams may be used for the plurality of SSBs.

### {Multiplexing Method 1a}

A plurality of SSBs may be time-division-multiplexed (TDMed).

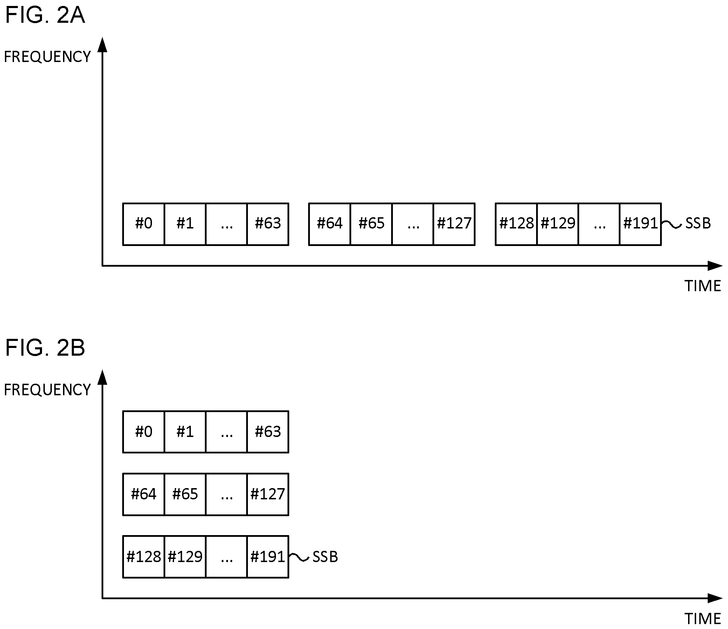

As shown in the example in FIG. 2A above, SSB #0 to SSB #192 may be TDMed.

Examples in the drawings of the embodiments show both part where time intervals between a plurality of SSBs/CSI-RSs are fixed and part where time intervals between a plurality of SSBs/CSI-RSs are not fixed. However, time intervals between a plurality of SSBs/CSI-RSs are not limited to these examples. Time intervals between a plurality of SSBs/CSI-RSs may be fixed but need not necessarily be fixed.

### {Multiplexing Method 2a}

A plurality of SSBs may be TDMed/frequency-division-multiplexed (FDMed)/code-division-multiplexed (CDMed)/space-division-multiplexed (SDM) .

As shown in the example in FIG. 2B below, SSB #0 to SSB #63 may be TDMed, SSB #64 to SSB #127 may be TDMed, and SSB #128 to SSB #191 may be TDMed. SSB #0 to SSB #63, SSB #64 to SSB #127, and SSB #128 to SSB #191 may be FDMed. Here, FDM/CDM/SDM may be used instead of FDM.

Multiplexing method 2a has shorter periodicity and higher resource use efficiency than those of multiplexing method 1a.

Periodicity of all SSBs/CSI-RSs may be the same as or different from periodicity of SSBs/CSI-RSs defined in an existing specification.

A plurality of SSBs may be grouped. Indices of SSBs included in a plurality of different groups may be the same. In this case, each SSB may be specified/identified by a group index and an SSB index. Indices of SSBs included in a plurality of different groups may be different from each other. In this case, each SSB may be specified/identified by an SSB index.

### {Multiplexing Method 1b}

A plurality of TDMed SSBs may be grouped. Group indices may be given in ascending order of time of groups.

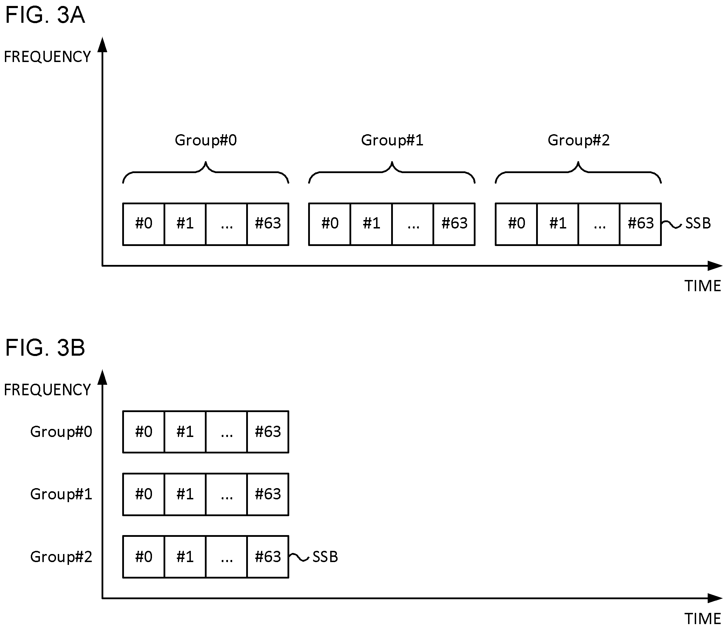

As shown in the example in FIG. 3A, each of groups (SSB groups) #0, #1, and #2 may include TDMed SSB #0 to SSB #63. Groups #0, #1, and #2 may be TDMed. Groups #0, #1, and #2 may include different SSBs. For example, group #1 may include TDMed SSB #64 to SSB #127, and group #2 may include TDMed SSB #128 to SSB#191.

In examples in the drawings of the embodiments, time intervals between a plurality of groups are fixed. However, time intervals between a plurality of groups are not limited to these examples. Time intervals between a plurality of groups may be fixed but need not necessarily be fixed.

### {Multiplexing Method 2b}

A plurality of TDMed/FDMed/CDMed/SDMed SSBs may be grouped. When a plurality of groups are FDMed, group indices may be provided in ascending order of frequency of the groups or may be provided in descending order of frequency of the groups.

As shown in the example in FIG. 3B, each of groups #0, #1, and #2 may include TDMed SSB #0 to SSB #63. Groups #0, #1, and #2 may be FDMed. Here, FDM/CDM/SDM may be used instead of FDM. Groups #0, #1, and #2 may include different SSBs. For example, group #1 may include TDMed SSB #64 to SSB #127, and group #2 may include TDMed SSB #128 to SSB#191.

Periodicity of groups may be the same as or different from periodicity of SSBs/CSI-RSs defined in an existing specification.

### <<Aspect 1-2»

This aspect relates to operation of reception/measurement/detection of an SSB.

### {Aspect 1-2-1}

The UE may perform reception/measurement/detection of a plurality of SSBs in the same symbol.

For example, the UE includes a plurality of reception panels, and the UE supporting operation of reception/measurement/detection of RSs of different DL beams simultaneously by using the plurality of panels (that has reported support of this operation by UE capability signaling) may be capable of performing this operation.

### {{Reception Operation A}}

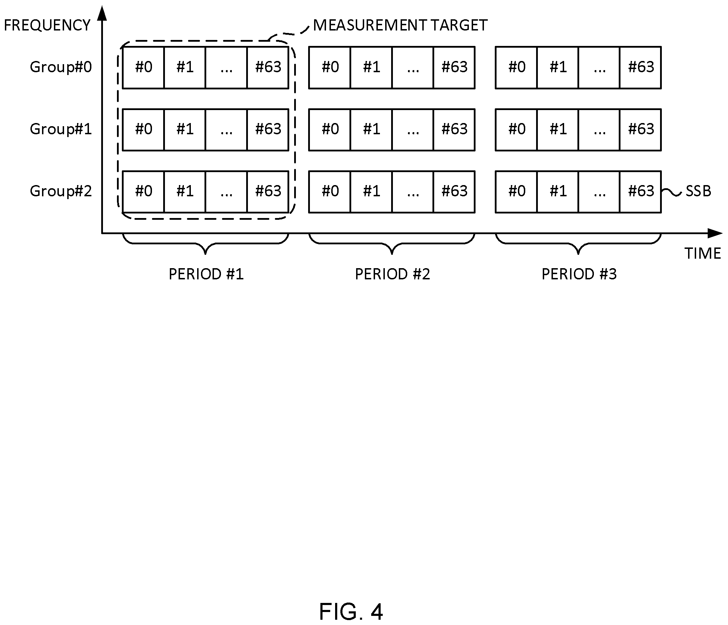

This UE may perform reception/measurement/detection of SSBs only in part of periods (for example, period #1) and need not necessarily perform reception/measurement/detection of SSBs in other periods (for example, periods #2 and #3) (FIG. 4). With this operation, power consumption required for the reception/measurement/detection of SSBs can be reduced.

With scheduling restriction defined in an existing specification, in the same symbol as that of an SSB/CSI-RS, a PDSCH that uses QCL type D, which is different from that of the SSB/CSI-RS, cannot be scheduled. Due to this restriction, such a PDSCH cannot be scheduled in a symbol overlapping with that of an SSB other than an SSB using the same beam. It may be defined in a specification that there is no scheduling restriction in period #2/#3 in reception operation A. In this case, a network can schedule a PDSCH in periods #2 and #3 without taking account of overlapping with an SSB in the time domain (same symbol), which can hence improve throughput / frequency use efficiency. In which period the UE performs reception/measurement/detection of SSBs and in which period the UE does not perform reception/measurement/detection of SSBs may be defined in a specification or may be configured by higher layer signaling.

### {{Reception Operation B}}

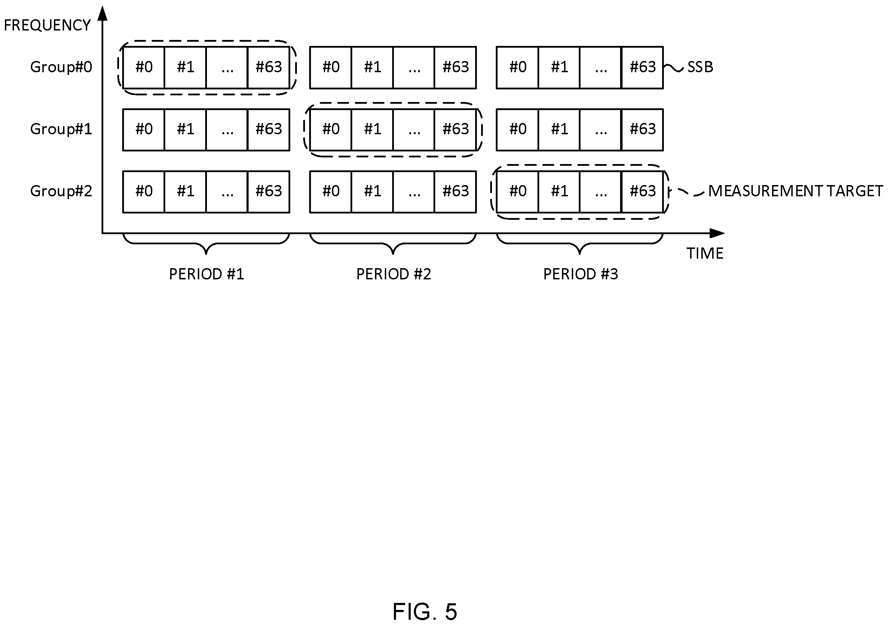

This UE may perform reception/measurement/detection of SSBs in all the periods (for example, periods #1 to #3) in which SSBs are transmitted (FIG. 5). This UE need not necessarily perform reception/measurement/detection of SSBs in part of periods (for example, periods #2 and #3).

With this operation, accuracy of the reception/measurement/detection of SSBs can be improved compared with that in reception operation A. The base station can reduce delay in reception/measurement/detection of all the SSBs compared with that in aspect 1-1.

### {Aspect 1-2-2}

It may be defined in a specification that the UE does not perform reception/measurement/detection of a plurality of SSBs in the same symbol.

For example, it may be defined that the UE includes a plurality of reception panels, and the UE not supporting operation of reception/measurement/detection of RSs of different DL beams simultaneously by using the plurality of panels (that does not report support of this operation by UE capability signaling) does not perform this operation.

This UE may perform reception/measurement/detection of SSBs in group #0 in period #1, perform reception/measurement/detection of SSBs in group #1 in period #2, and perform reception/measurement/detection of SSBs in group #2 in period #3 (may perform frequency hopping of SSB groups to measure).

The UE that cannot receive different DL RSs with QCL type D in the same symbol (including a UE according to Rel. 15/16) can perform, even when SSBs are FDMed/CDMed/SDMed, reception/measurement/detection of the SSBs by using one QCL-type-D RS in a given symbol as in Rel. 15. In this way, UE operation is simplified. Due to the scheduling restriction described above, a PDSCH cannot be scheduled in the same symbol as that for an SSB in an existing specification, and hence the symbol is not used effectively. However, by a different SSB being FDMed/CDMed/SDMed with the symbol, the symbol can be used more efficiently.

The UE may hop the frequency/code/space of measurement-target SSBs/groups every period/frame/subframe/slot/symbol. The correspondence between measurement-target periods and SSBs/groups (hopping method) may be defined in a specification, may be configured by higher layer signaling, or may depend on UE implementation.

A formula/function for determining group/SSB indices for each period/frame/subframe/slot/symbol may be defined in a specification. The index of each group/SSB may be a function of the index of a corresponding period/frame/subframe/slot/symbol.

The indices of measurement-target SSBs/groups may be changed every period/frame/subframe/slot/symbol. For example, it may hold that group index = mod (period index * m, the number of groups). m may be 1 or may be greater than 1.

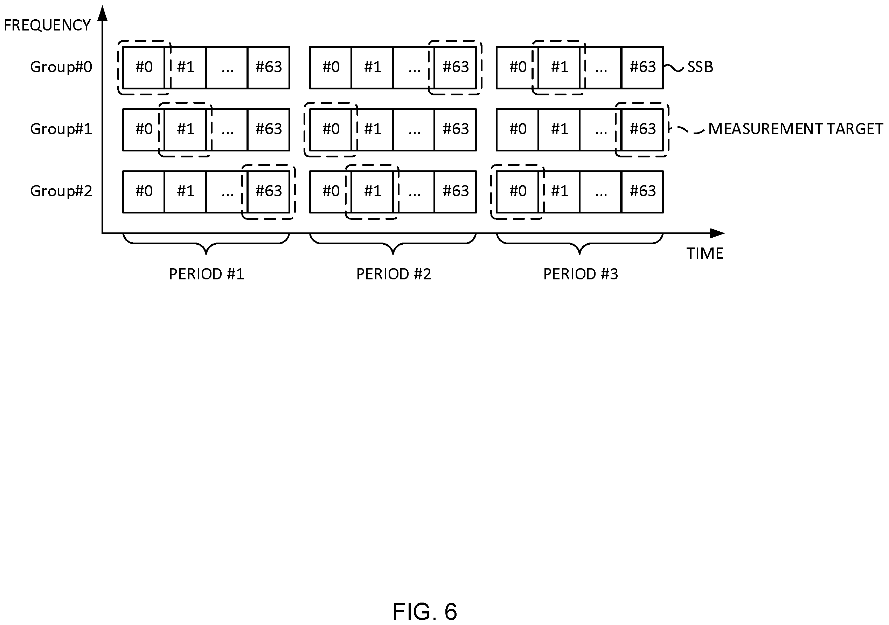

As in the example in FIG. 6, the UE may hop a measurement-target group every symbol. In this case, each measurement-target group index may be a function of a corresponding symbol index.

### <<Aspect 1-3»

Periodicity of SSBs/CSI-RSs may be defined/configured by using first periodicity and second periodicity

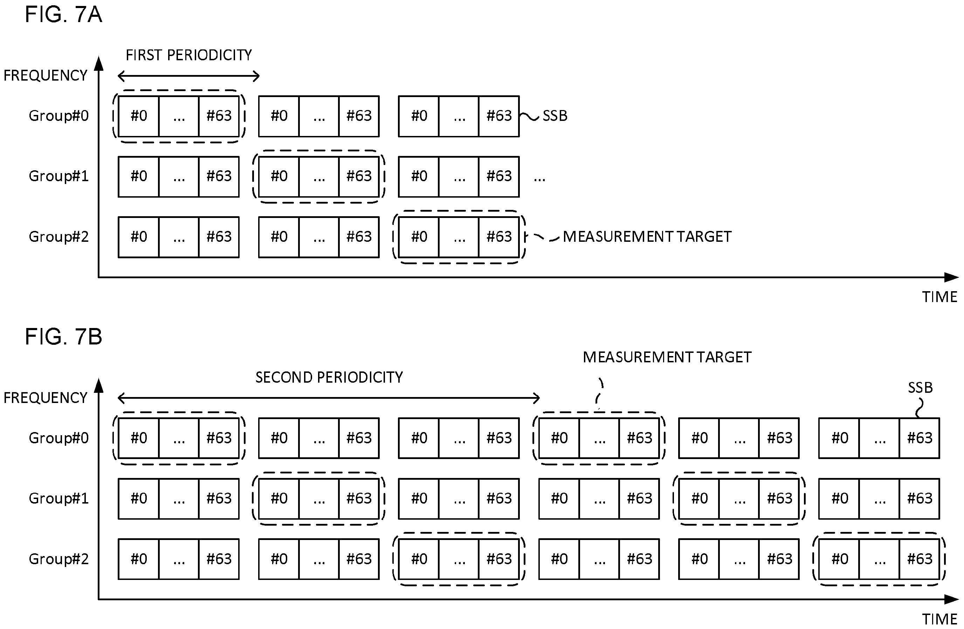

As in the example in FIG. 7, only the first periodicity may be defined/configured, and the second periodicity may be obtained by the first periodicity x the number of groups. The number of groups may be defined in a specification, may be notified/broadcast by an MIB/SIB/PBCH or the like, may be blind-detected by the UE, or may be configured by an RRC IE.

The first periodicity may be the same as or different from periodicity (transmission periodicity) of SSBs/CSI-RSs defined in an existing specification.

Time from indication to application of a TCI state may be defined based on the second periodicity.

According to this embodiment, the UE can appropriately perform reception/measurement/detection of SSBs.

### <Second Embodiment>

This embodiment relates to measurement-target SSBs/CSI-RSs.

In Rel. 15, a UE measures all configured/defined SSBs and reports/uses a beam having the best measurement result. At the time of random access channel (RACH) transmission, the UE transmits a PRACH in a physical random access channel (PRACH) occasion corresponding to an SSB having the highest received power. The UE reports, to a base station, one/two/four SSB resource indicators (SSBRIs) / CSI-RS resource indicators (CRIs) having the highest L1-reference signal received power(s) (RSRP(s)) / L1-signal-to-interference and noise ratio(s) (SINR(s)) among those of configured SSBs/CSI-RSs and the value(s) of the L1-RSRP(s)/L1-SINR(s) in layer 1 (L1) beam report after RRC connection is established.

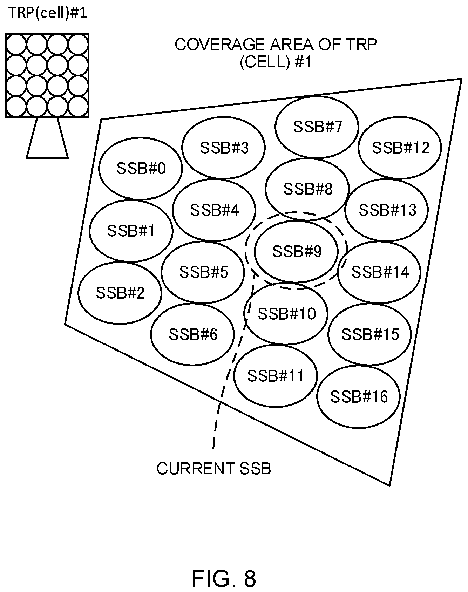

When the number of beams increases, it takes time to search for all the beams, which is inefficient. It is assumed, at the difference of beam switching, that the currently used beam is switched to a beam around the currently used beam, and hence the UE need not necessarily search for all the beams. For example, in the example in FIG. 8, it can be expected that, among SSBs #0 to #16 in the cover area of TRP (cell) #1, the beam of SSB #9 in use is switched to any of the SSBs #4, #5, #6, #8, #10, #13, #14, and #15 around SSB #9.

The UE may select a particular (measurement-target) SSB/CSI-RS from among all the (configured/defined) SSBs/CSI-RSs and perform reception/measurement/detection of the particular SSB/CSI-RS.

Occasions of reception/measurement/detection of SSBs/CSI-RSs may be at least one of or all the time of measurement/report of an L1-RSRP/L1-SINR/L3-RSRP/L3-SINR, the time of determination of a PRACH occasion for PRACH transmission, the time of determination of a new beam RS in BFR, and the time of measurement for event-based beam report. The UE may report, to the base station, the indices of the top X measurement results among the indices of the measurement-target SSBs/CSI-RSs.

The index of the current SSB/CSI-RS (in use) may be a TCI state / spatial relation configured for the current PDCCH/PDSCH/PUCCH/PUSCH/SRS/CSI-RS, a TCI state configured for a PDCCH, a DL-TCI state or a joint TCI state configured as a unified TCI state (common TCI state), or the index (SSBRI/CRI) of the SSB/CSI-RS corresponding to the index of the best beam reported by L1-RSRP/L1-SINR beam report.

A method of selecting a particular SSB/CSI-RS may follow at least one of selection method 1 and 2 below.

### «Selection Method 1»

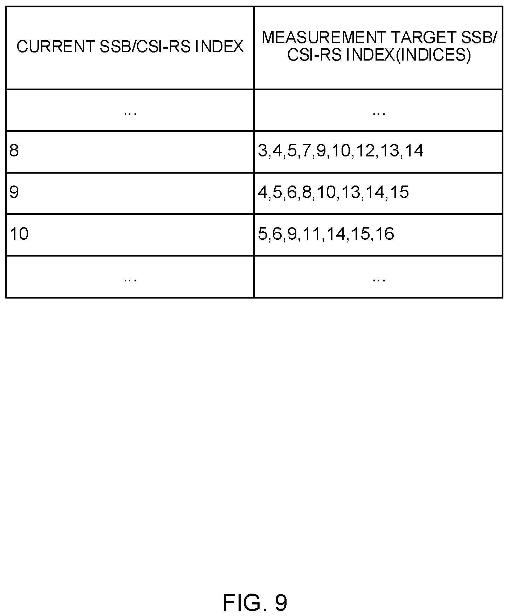

The correspondence between the index of the current SSB/CSI-RS and the index (indices) of the measurement-target SSB(s)/CSI-RS(s) (association, relationship of state transition from the index of the current SSB/CSI-RS to the index (indices) of the measurement-target SSB(s)/CSI-RS(s)) may be notified/configured. In the example in FIG. 9, the correspondence may indicate association with the index (indices) of one or more measurement-target SSBs/CSI-RSs for the index of each current SSB/CSI-RS.

When the UE determines whether to switch the beam, the UE may determine whether the measurement result(s) of the measurement-target SSB(s)/CSI-RS(s) is better or worse than the measurement result of the current SSB/CSI-RS. Even when the index (indices) of the measurement-target SSB(s)/CSI-RS(s) is not explicitly notified, the index (indices) of the measurement-target SSB(s)/CSI-RS(s) may include the index of the current SSB/CSI-RS. However, at the time of determination of a new beam RS in BFR, the index of the current SSB/CSI-RS corresponds to a beam with a failure (failed beam), and hence the index need not necessarily be included in the index (indices) of the measurement-target SSB(s)/CSI-RS (s) .

### «Selection Method 2»

The UE may determine the indices of measurement-target (particular) SSBs/CSI-RSs (indices of a plurality of SSBs/CSI-RSs), based on the index of the current SSB/CSI-RS according to a rule. The rule may be at least one of rules 1 to 4 below.

### {Rule 1}

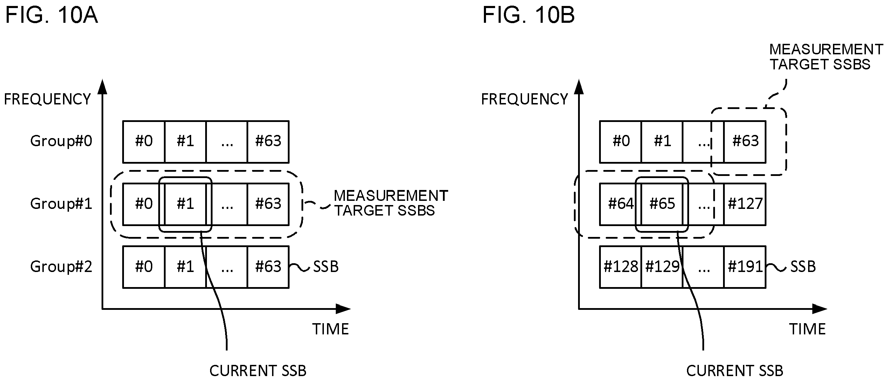

When a group in the first embodiment is defined, the indices of the measurement-target SSBs/CSI-RSs may be the indices of all the SSBs/CSI-RSs in the group including the index of the current SSB/CSI-RS or may be the indices of the SSBs/CSI-RSs in the group excluding the index of the current SSB/CSI-RS. In the example in FIG. 10A, current SSB #1 is included in group #1. The UE may select SSB#0 to SSB #63 in group #1 same as the group of the current SSB, as measurement targets.

By limiting the number of measurement-target SSBs to a particular number of SSBs in one period/periodicity or less, the UE can perform reception/measurement/detection of all the measurement-target SSBs in one period/periodicity. The particular number may be the number of SSBs in one group.

The number of measurement-target SSBs need not necessarily be limited to a particular number of SSBs in one period/periodicity or less. In this case, the UE may receive one SSB in the same symbol and perform reception/measurement/detection of all the measurement-target SSBs over a plurality of periods/periodicities, or may receive a plurality of SSBs in the same symbol by using a plurality of panels and perform reception/measurement/detection of all the measurement-target SSBs in one period/periodicity.

### {Rule 2}

The indices of the measurement-target SSBs/CSI-RSs may be the indices of a given number of SSBs/CSI-RSs before and after the index of the current SSB/CSI-RS or may be the indices of a given number of SSBs/CSI-RSs in a range including the index of the current SSB/CSI-RS. For example, when the index of the current SSB/CSI-RS is m and the number of indices of measurement-target SSBs/CSI-RSs is N, the range of the indices of the measurement-target SSBs/CSI-RSs may be the indices of N SSB/CSI-RSs from an index m - floor(N/2) of an SSB/CSI-RS to an index m + ceil(N/2) - 1 of an SSB/CSI-RS.

Formulas for the indices of measurement-target SSBs/CSI-RSs are not limited to the formulas. The indices of the measurement-target SSBs/CSI-RSs may be the indices of N + 1 SSBs/CSI-RSs from the index m - floor (N/2) of the SSB/CSI-RS to an index m + ceil(N/2) of the SSB/CSI-RS or the indices of N SSBs/CSI-RSs obtained by excluding the index m of the current SSB/CSI-RS from the indices of N + 1 SSBs/CSI-RSs from the index m - floor (N/2) of the SSB/CSI-RS to the index m + ceil(N/2) of the SSB/CSI-RS (with the index m of the current SSB/CSI-RS in the middle). Instead of floor/ceil, floor/ceil/round may be used. When a distance D from the index of the current SSB/CSI-RS being m is configured, the indices of the measurement-target SSBs/CSI-RSs may be the indices of 2D + 1 SSBs/CSI-RSs from the index m - D of the SSB/CSI-RS to an index m + D of the SSB/CSI-RS (with the index m of the current SSB/CSI-RS in the middle) or the indices of 2D SSBs/CSI-RSs obtained by excluding the index m of the current SSB/CSI-RS from the indices of 2D + 1 SSBs/CSI-RSs from the index m - D of the SSB/CSI-RS to the index m + D of the SSB/CSI-RS (with the index m of the current SSB/CSI-RS in the middle). The indices of the measurement-target SSBs/CSI-RSs may be indices at particular intervals (for example, two) (with the index m of the current SSB/CSI-RS in the middle).

To avoid the indices p of the SSBs/CSI-RSs obtained according to the formulas exceeding the number Q of the indices of the SSBs/CSI-RSs or resulting in being negative, the indices of the measurement-target SSBs/CSI-RSs may be given by mod(p, Q).

SSB groups need not necessarily be used. In the example in FIG. 10B, when SSBs #0 to #191 are transmitted, the current SSB is SSB #65, and the number N of measurement-target SSBs is five, the measurement-target SSBs may be SSBs #63 to #67.

The indices of the measurement-target SSBs/CSI-RSs may be non-sequential. For example, the indices of the measurement-target SSBs/CSI-RSs may be alternate.

### {Rule 3}

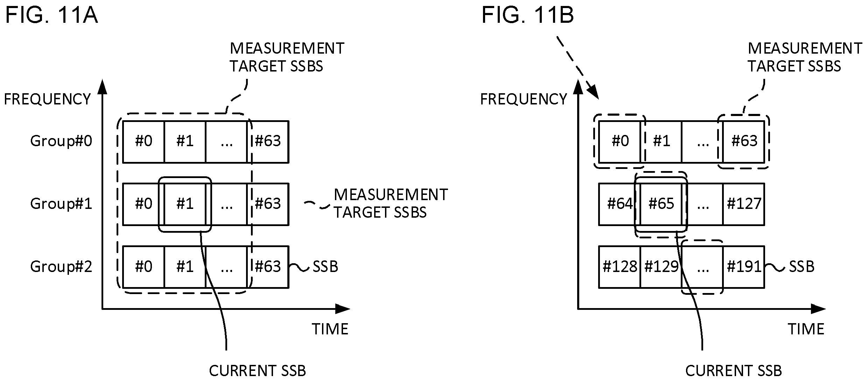

The measurement-target SSBs/CSI-RSs may be SSBs/CSI-RSs adjacent to each other in the time axis and adjacent to the current SSB/CSI-RS in the frequency axis (SSBs/CSI-RSs around/adjacent to the current SSB/CSI-RS in a time-frequency plane). In the example in FIG. 11A, groups #0 to #2 are transmitted, and each of groups #0 to #2 includes SSBs #0 to #63. The current SSB is SSB #1 in group #1, and measurement-target SSBs include SSBs #0 to #2 in group #0, SSBs #0 to #2 in group #1, and SSBs #0 to #2 in group #2.

In this case, the measurement-target SSBs may include a plurality of SSBs in the same symbol. In this case, the UE may receive one SSB in the same symbol and perform reception/measurement/detection of all the measurement-target SSBs over a plurality of periods/periodicities, or may receive a plurality of SSBs in the same symbol by using a plurality of panels and perform reception/measurement/detection of all the measurement-target SSBs in one period/periodicity.

### {Rule 4}

The measurement-target SSBs/CSI-RSs may be determined based on addition of n to the time-direction index of the current SSB/CSI-RS and addition of m to the frequency-direction index of the current SSB/CSI-RS. In the example in FIG. 11B, SSBs #0 to #191 are transmitted, and n = 1 and m = 1. The current SSB is SSB #0, and the next measurement-target SSB is SSB #65, which is obtained by adding 1 to the time-direction index while adding 1 to the frequency-direction index. The next measurement-target SSB/CSI-RS is SSB #131, which is obtained by adding 1 to the time-direction index while adding 1 to the frequency-direction index.

According to this embodiment, the UE can appropriately determine a measurement-target SSB(s)/CSI-RS(s).

### <Third Embodiment>

This embodiment relates to switching of measurement targets.

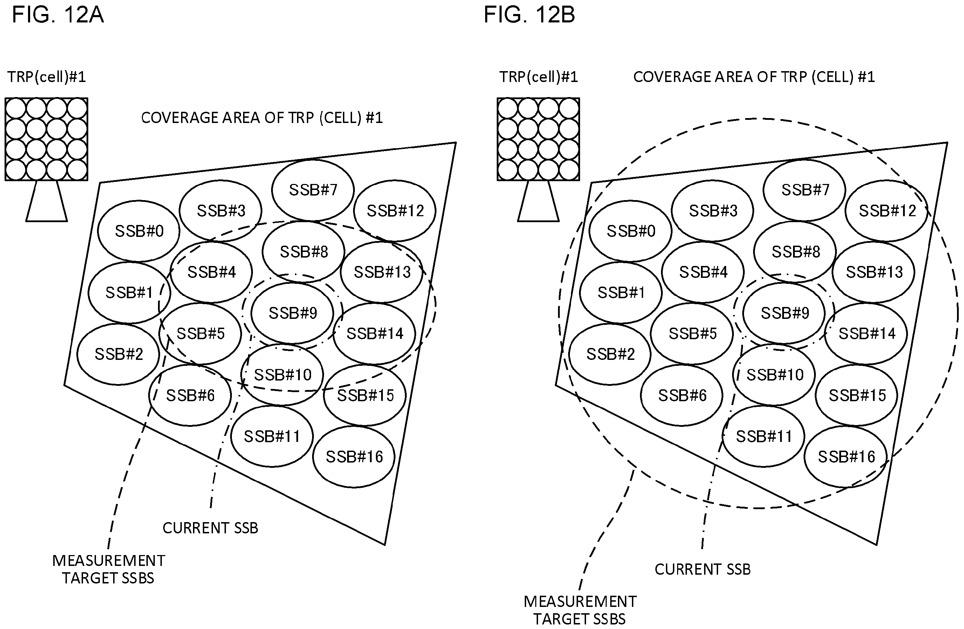

Operation A for performing reception/measurement/detection of all configured SSBs/CSI-RSs (FIG. 12B) and operation B for performing reception/measurement/detection of particular SSBs/CSI-RSs among the configured SSBs/CSI-RSs (FIG. 12A) may be switched. The second embodiment may be applied to operation B.

By switching from operation A to operation B, reception/measurement/detection of unnecessary SSBs/CSI-RSs can be avoided, to thereby be able to reduce time/delay for reception/measurement/detection of SSBs/CSI-RSs. By not performing reception/measurement/detection of SSBs/CSI-RSs in part of periods, the scheduling restriction is avoided, to thereby be able to increase throughput.

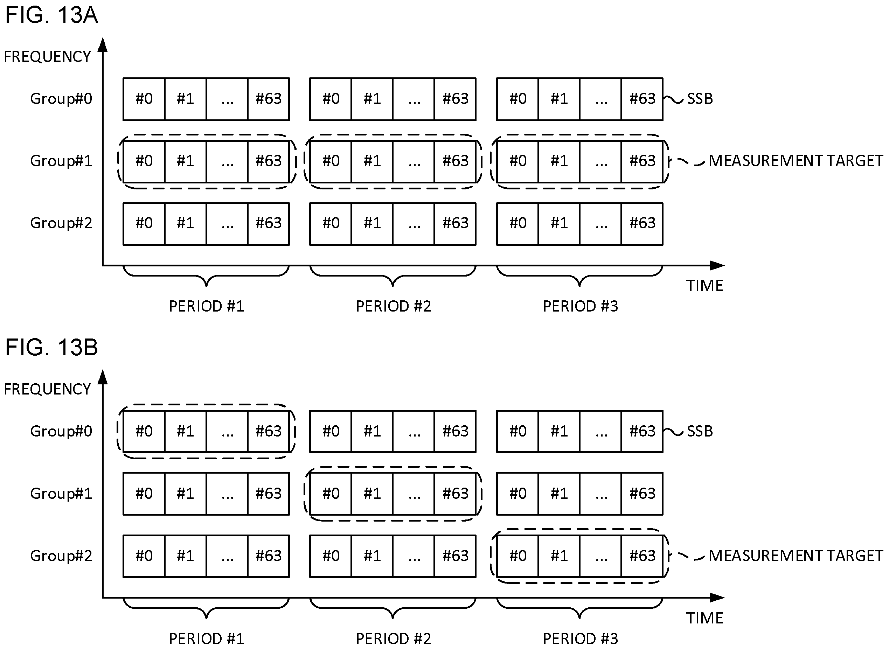

In the examples in FIGS. 13A and 13B, groups #0 to #2 are transmitted. Each of groups #0 to #2 includes SSB #0 to SSB #63. FIG. 13A shows an example of operation B. By selecting group #1 as a measurement target from configured groups #0 to #2 and performing reception/measurement/detection of only group #1, the UE can complete reception/measurement/detection of all of measurement-target SSBs #0 to #63 in only one of periods #1 to #3, which can reduce delay of measurement. FIG. 13B shows an example of operation A. By performing reception/measurement/detection of all the SSBs in configured groups #0 to #2, the UE can complete reception/measurement/detection of all the SSBs in periods #1 to #3.

Switching between operations A to B may follow at least one of switching methods 1 to 3 below.

### <<Switching Method 1»

Switching may be performed according to indication (RRC IE / MAC CE / DCI) from the base station.

An RRC IE / MAC CE for notification of the indices of measurement-target SSBs/CSI-RSs may be defined in a specification.

A particular field in DCI with a field triggering aperiodic CSI (A-CSI) (for example, a CSI request field) such as DCI format 0_0/0_1/0_2 may be used for indication of switching. The particular field may follow at least one of fields 1 and 2 below.

### {Field 1}

When configuration is made by higher layer signaling, the DCI may include a particular field for switching.

### {Field 2}

The particular field may be a field triggering A-CSI. The field triggering A-CSI may indicate an indication index = {0, 1}. Here, 0 may indicate operation A while 1 may indicate operation B, or other way round.

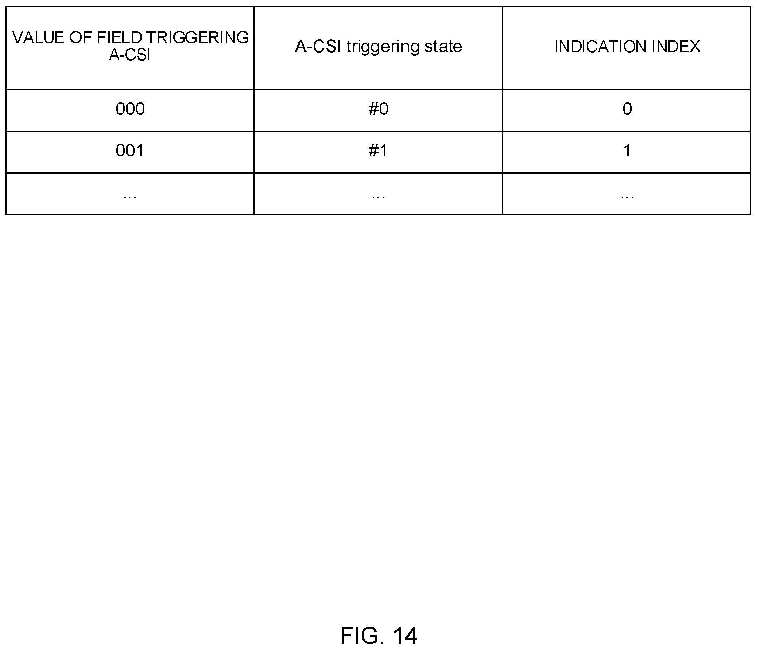

At least one of association between values (code points) of the field triggering A-CSI and indication indices and association between A-CSI triggering states and indication indices may be defined in a specification or may be configured by higher layer signaling. In the example in FIG. 14, values of the field triggering A-CSI, A-CSI triggering states, and indication indices are associated. The UE may determine at least one of an A-CSI triggering state and an indication index, based on the value of the field triggering A-CSI, according to this association.

### <<Switching Method 2»

Switching may be based on a condition. For example, the UE may perform operation B when the condition is satisfied, while the UE may perform operation A when the condition is not satisfied. The condition may include at least one of operation B conditions 1 to 3 below.

### {Operation B Condition 1}

The condition may be that a result/quality of reception/measurement/detection of the current SSB/CSI-RS is preferable. The result being preferable may mean that the result is equal to or higher than a threshold (or higher than the threshold). The result may be an RSRP/SINR/RSRQ.

### {Operation B Condition 2}

The condition may be that the top X results of reception/measurement/detection in operation B are preferable. The results being preferable may mean that the results are equal to or higher than a threshold (or higher than the threshold). The results may each be an RSRP/SINR/RSRQ. The value X may be configured by higher layer signaling or may be defined in a specification. When the value X is not configured, the value X may be a particular value. The particular value may be 1 or may be greater than 1.

### {Operation B Condition 3}

The condition may be that a parameter related to the traveling speed of the UE is equal to or lower than a threshold (or lower than the threshold). The parameter may be Doppler shift, the number of times of handover in a particular period or the number of beams changed in L1/L3 beam reports (reports of top X beams) in a particular period (the number of beams immediately different from beams in a previous report, among the beams in the reports).

### <<Switching Method 3»

Switching may be based on a condition. For example, the UE may perform operation A when the condition is satisfied, while the UE may perform operation B when the condition is not satisfied. The condition may include at least one of operation A conditions 1 to 3 below.

### {Operation A Condition 1}

The condition may be that a result/quality of reception/measurement/detection of the current SSB/CSI-RS is poor. The result being poor may mean that the result is equal to or lower than a threshold (or lower than the threshold). The result may be an RSRP/SINR/RSRQ.

### {Operation A Condition 2}

The condition may be that the top X results in operation B are poor. The result being poor may mean that the result is equal to or lower than a threshold (or lower than the threshold). The result may be an RSRP/SINR/RSRQ. The value X may be configured by higher layer signaling or may be defined in a specification. When the value X is not configured, the value X may be a particular value. The particular value may be 1 or may be greater than 1.

### {Operation A Condition 3}

The condition may be that a parameter related to the traveling speed of the UE is equal to or higher than a threshold (or higher than the threshold). The parameter may be Doppler shift, the number of times of handover in a particular period or the number of beams changed in L1/L3 beam reports (reports of top X beams) in a particular period (the number of beams immediately different from beams in a previous report, among the beams in the reports).

In this embodiment, switching between operations A and B has been described. However, operations to be switched are not limited to these two operations. For example, the UE may perform reception/measurement/detection of X particular ones of configured SSBs/CSI-RSs and any of the switching method of this embodiment may be employed for switching of the X values. For example, any of the switching methods of this embodiment may be employed for switching between X = 32 and X = 64. For example, any of the switching methods of this embodiment may be employed for switching between X = 32, X = 64, and X = 192 (all the SSBs/CSI-RSs, operation A). When the number of switchable operations is larger than two, the size (number of bits) of an indication index may be two bits or more.

According to this embodiment, the UE can appropriately switch the number of measurement-target SSBs/CSI-RSs.

### <Fourth Embodiment>

This embodiment relates to switching of kinds of beams / groups / width / numbers.

Operation of reception/measurement/detection of group A of SSBs/CSI-RSs covering the area of a given TRP/cell (cover area, service area, coverage) and operation of reception/measurement/detection of group B of SSBs/CSI-RSs covering the service area may be switched. Each beam used for group B may be narrower (thinner) than each beam used for group A. The number of SSBs/CSI-RSs in group B may be larger than the number of SSBs/CSI-RSs in group A.

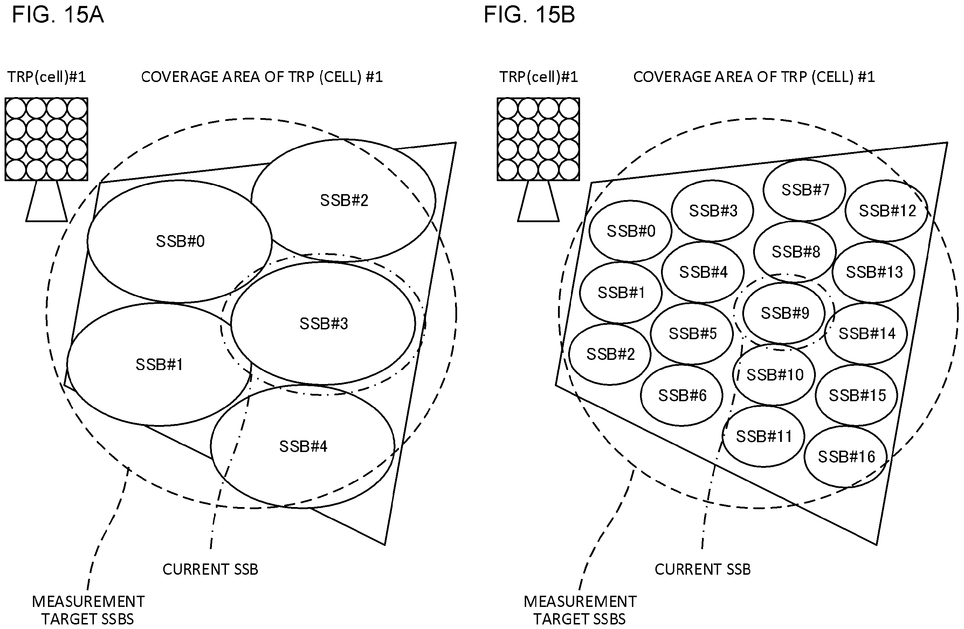

In the example in FIG. 15A, group A of SSBs is transmitted. Beams used for the five SSBs (SSB #0 to SSB #4) in group A cover the cover area of TRP (cell) #1. In the example in FIG. 15B, group B of SSBs is transmitted. Beams used for the 17 SSBs (SSB #0 to SSB #16) in group B cover the cover area of TRP (cell) #1.

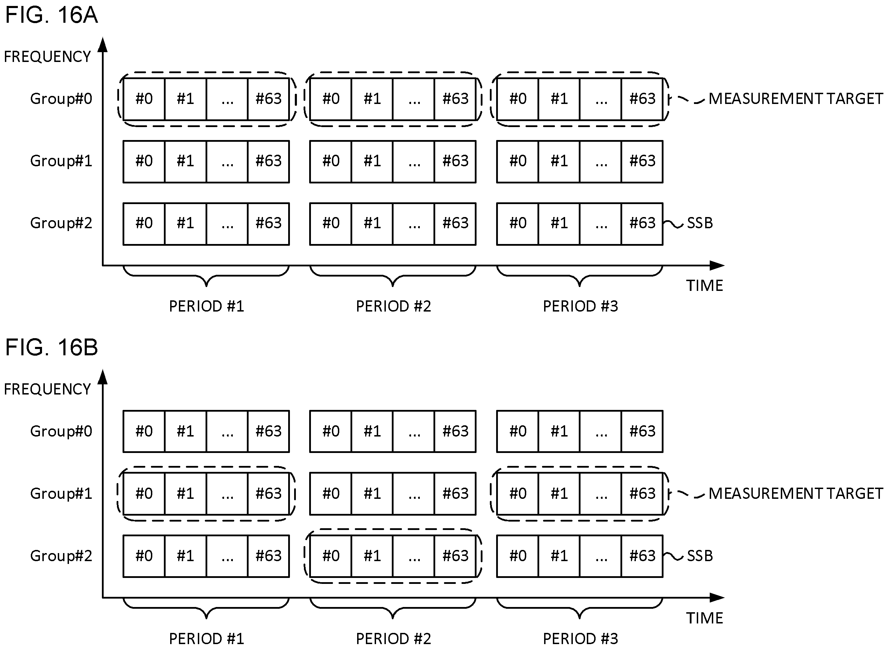

In the example in FIG. 16A, group #0 corresponds to group #A. The UE performs reception/measurement/detection of group #0 in each of periods #1 to #3. In the example in FIG. 16B, groups #1 and #2 correspond to group #B. The UE performs reception/measurement/detection of group #1 in periods #1, #3, ... and performs reception/measurement/detection of group #2 in periods #2, #4, ....

Similarly to group A, the area of one cell may be covered by a plurality of SSBs in group #0 (beams used for the SSBs). Similarly to group B, the area of one cell may be covered by a plurality of SSBs in groups (groups #1 and #2) other than group #0 (beams used for the SSBs).

The SSBs in group A may be SSBs of Rel. 15.

Any of the switching method/conditions of the third embodiment may be employed for switching between group A and group B. Switching may be performed according to indication (RRC IE / MAC CE / DCI) from the base station. Switching may be based on a condition. For example, the UE may use group B when the condition is satisfied, while the UE may use group A when the condition is not satisfied. For example, the UE may use group A when the condition is satisfied, while the UE may use group B when the condition is not satisfied.

The condition using group B may include at least one of group B conditions 1 and 2 below.

### {Group B Condition 1}

The condition may be that indication/configuration related to group B is made from the base station. When there is no indication from the base station, the UE may perform reception/measurement/detection of only group A. When there is indication/configuration related to group B from the base station, the UE may perform reception/measurement/detection of group B in addition to reception/measurement/detection of group A. In this case, quality can be improved compared with reception/measurement/detection of only group A. The UE may perform two-stage beam sweeping. Beam sweeping in the first stage may be reception/measurement/detection of group A. Beam sweeping in the second stage may be reception/measurement/detection of group B.

### {Group B Condition 2}

The condition may be that results/qualities of reception/measurement/detection of the SSBs/CSI-RSs in group A include no result/quality equal to or higher than a threshold (or higher than threshold). The results may be RSRPs/SINRs/RSRQs. When results/qualities of reception/measurement/detection of the SSBs/CSI-RSs in group A include no result/quality equal to or higher than a threshold (or higher than threshold), the UE may perform reception/measurement/detection of group B.

For example, in beam report of L1-RSRPs/L1-SINRs, the UE may basically perform reception/measurement/detection of group A and report SSBRIs/CRIs and L1-RSRPs/L1-SINRs of group A. When a condition is satisfied, the UE may perform reception/measurement/detection of group B and report SSBRIs/CRIs and L1-RSRPs/L1-SINRs of group B.

Occasions of reception/measurement/detection of SSBs/CSI-RSs may be at least one of or all the time of measurement of an L1-RSRP/L1-SINR/L3-RSRP/L3-SINR, the time of determination of a PRACH occasion for PRACH transmission, the time of determination of a new beam RS in BFR, and the time of measurement for event-based beam report. The UE may report, to the base station, the indices of top X measurement results among the indices of the measurement-target SSBs/CSI-RSs (at least one of groups A and B) .

In an initial access procedure / random access procedure, the UE may perform reception/measurement/detection of the SSBs in group A. In the initial access procedure / random access procedure, the UE may use group B when the condition is satisfied, while the UE may use group A when the condition is not satisfied.

The initial access procedure / random access procedure may follow at least one of PRACHs 1 to 3 below.

### {PRACH 1}

Occasions/preambles of PRACHs corresponding to the SSBs in group A and occasions/preambles of PRACHs corresponding to the SSBs in group B may be different from each other. With this, the base station can find out, at the time of PRACH reception, which one of group A and group B the SSB measured by the UE belongs to.

### {PRACH 2}

Occasions/preambles of PRACHs corresponding to the SSBs in group A and occasions/preambles of PRACHs corresponding to the SSBs in group B may be equal to each other. With this, the number of occasions/preambles necessary for PRACHs can be made substantially equal to the number of SSBs in group A, which can improve resource use efficiency.

### {PRACH 3}

Occasions of PRACHs corresponding to the SSBs in group A and occasions of PRACHs corresponding to the SSBs in group B may be equal to each other. Preambles of PRACHs corresponding to the SSBs in group A and preambles of PRACHs corresponding to the SSBs in group B may be different from each other. With this, the number of occasions necessary for PRACHs can be made substantially equal to the number of SSBs in group A, which can improve resource use efficiency. In addition, the base station can find out, at the time of PRACH reception, which one of group A and group B the SSB measured by the UE belongs to, based on the preamble.

In this embodiment, switching between groups A and B has been described. However, groups to be switched are not limited to these two groups. Any of the switching method in this embodiment may be employed for switching between group A and all the groups including group A (groups A and B), may be employed for switching between group A and all the groups including group A (groups A and B), may be employed for switching between group A and a plurality of groups including group A (for example, groups #0 and #1 or groups #0 and #2), or may be employed for switching between two or more groups (for example, at least two of group #0, group #1, group #2, groups #0 and #1, groups #0 and #2, groups #1 and #2, and groups #0, #1, and #2). Here, the quality of group A is not necessarily worse than the quality of group B. Although the index of group A (group used for default reception/measurement/detection, group with a smaller number of SSBs/CSI-RSs, group using wider beams) is assumed to be 0, this need not necessarily be 0.

According to this embodiment, the UE can appropriately switch the groups/beams/numbers/areas of measurement-target SSBs/CSI-RSs.

### <Fifth Embodiment>

This embodiment relates to a method of notification/configuration/indication/report of the index of an SSB/CSI-RS.

When the number of SSBs/CSI-RSs is larger than 64 in a case where the base station configures / provides notification of an SSB index (for a QCL source RS, a PL-RS, a PRACH triggered by a PDCCH order, or the like) for/to the UE, a case where the base station reports an SSBRI/CRI in an L1 beam report in UCI, or the like, the index cannot be notified by existing six bits. In particular, this is a problem when a MAC CE /DCI is used to provide notification of an SSB index and when UCI is used to provide notification of an index (SSBRI/CRI).

A method of providing notification of the index of an SSB/CSI-RS may follow at least one of notification methods 1 to 3 below.

### <<Notification Method 1»

The number of bits (field size) for notification/indication/configuration/report of the index of each SSB/CSI-RS may be larger than an existing number of bits for notification/indication/configuration/report of the index of an SSB/CSI-RS. In a MAC CE / DCI / UCI / RRC IE, the size of a field for notification of the index of each SSB/CSI-RS may be larger than six bits. In a case where reception/measurement/detection of more than 64 SSBs is configured, the size of a field for notification of each SSB index may be larger than six bits. In a MAC CE / DCI / UCI / RRC IE, the size of a field for notification of the index of each SSB/CSI-RS may be variable according to the number of configured SSBs/CSI-RSs (may depend on the number of configured SSBs/CSI-RSs).

### <<Notification Method 2»

Most significant X bits (or least significant X bits) of the index of each SSB/CSI-RS may indicate a group index. For example, most significant X bits (or least significant X bits) of the index of each SSB/CSI-RS may indicate a group index while remaining Y bits may indicate the index of the SSB/CSI-RS in the corresponding group. At least one of X and Y may be configured by higher layer signaling or may be defined in a specification. The UE may determine X, based on the number of configured groups. The UE may determine Y, based on the number of SSBs/CSI-RSs in each of the configured groups.

The most significant bit (MSB) or the least significant bit (LSB) of an SSBRI/CRI field may indicate whether the index indicated by the field is for an SSB or a CSI-RS, and the remaining bits may indicate at least one of the group index and the index of the SSB/CSI-RS.

### <<Notification Method 3»

The number of bits (field size) for notification/indication/configuration/report of the index of each SSB/CSI-RS may be the same as an existing number of bits for notification/indication/configuration/report of the index of an SSB/CSI-RS. The group index may be implicitly notified (UE may determine a group index, based on notified information). When the maximum number of SSBs is 64, the number of bits for notification/indication/configuration/report of the index of each SSB/CSI-RS may be six. The number of bits for notification/indication/configuration/report of the index of each SSB/CSI-RS is not limited to this number.

### {Notification Method 3-1}

The number of bits (field size) for notification/indication/configuration/report of the index of each SSB/CSI-RS may be the same as an existing number of bits for notification/indication/configuration/report of the index of an SSB/CSI-RS. The UE may determine a group index by using the index of an SSB/CSI-RS notified by a MAC CE/DCI. The UE may implicitly provide notification of a group index by using the index of the SSB/CSI-RS notified by a MAC CE/UCI.

### {Notification Method 3-2}

It is conceivable that group indices are not changed frequently compared with the indices of SSBs/CSI-RSs. A group index and the index of an SSB/CSI-RS may be notified/reported by different MAC CEs / DCIs / UCIs. Each group index may be notified/reported with long periodicity (with low frequency) while the index of each SSB/CSI-RS may be notified/reported with short periodicity (with high frequency).

The group in this embodiment may be a group in the first embodiment or may be measurement-target SSBs/CSI-RSs in the second embodiment.

According to this embodiment, the group/indices of SSBs/CSI-RSs can be appropriately notified/reported/indicated/configured.

### <Other Embodiments>

### <<UE Capability Information / Higher Layer Parameter»

A higher layer parameter (RRC IE) / UE capability corresponding to each function (characteristics, feature) in each of the embodiments above may be defined. The higher layer parameter may indicate whether to enable the function. The UE capability may indicate whether the UE supports the function.

The UE configured with the higher layer parameter corresponding to the function may perform the function. It may be configured that the "UE not configured with the higher layer parameter corresponding to the function does not perform the function (for example, follow Rel. 15/16)."

The UE that has reported/transmitted the UE capability indicating support of the function may perform the function. It may be configured that the "UE that has not reported the UE capability indicating support of the function does not perform the function (for example, follow Rel. 15/16)."

When the UE has reported/transmitted the UE capability indicating support of the function and is configured with the higher layer parameter corresponding to the function, the UE may perform the function. It may be configured that "when the UE does not report/transmit the UE capability indicating support of the function or is not configured with the higher layer parameter corresponding to the function, the UE does not perform the function (for example, follow Rel. 15/16)."

Which one of embodiments/options/choices/functions of the plurality of embodiments above is used may be configured by a higher layer parameter, may be reported as UE capability by the UE, may be defined in a specification, or may be determined based on reported UE capability and configuration of a higher layer parameter.

The UE capability may indicate whether the UE supports at least one of the functions below.
- Reception/measurement/detection of a group of SSBs/CSI-RSs. The UE capability may indicate the maximum number of supported groups. When the UE does not report this number, the maximum number of groups supported by the UE may be one.
- Reception/measurement/detection of different SSBs/CSI-RSs (with different indices) in the same symbol.

With the above UE capability / higher layer parameter, the UE can perform the functions while maintaining compatibility with existing specifications.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

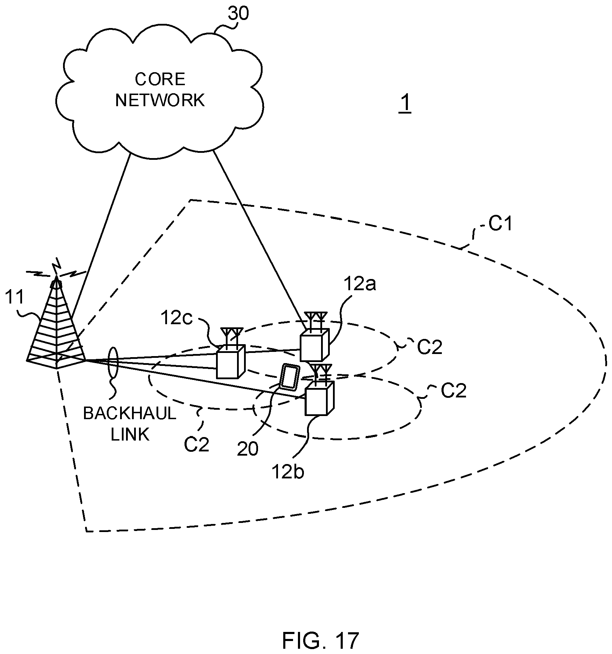

FIG. 17 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the

### PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

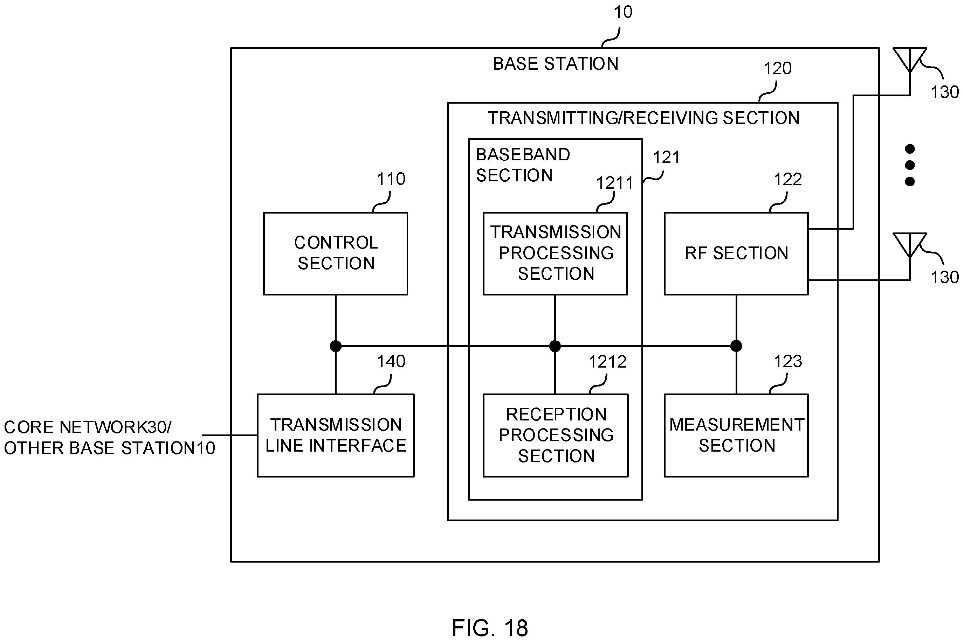

FIG. 18 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a plurality of reference signals by using respective different resources. The control section 110 may control association of one reference signal among the plurality of reference signals and two or more reference signals among the plurality of reference signals. The number of the plurality of reference signals may be larger than 64.

The control section 110 may determine one operation from a plurality of operations including a first operation in which the user terminal 20 receives a plurality of first reference signals among a plurality of reference signals and a second operation in which the user terminal 20 receives a plurality of second reference signals among the plurality of reference signals. The transmitting/receiving section 120 may transmit information indicating the one operation. The number of the plurality of second reference signals may be smaller than the number of the plurality of first reference signals.

The control section 110 may determine one operation from a plurality of operations including a first operation in which the user terminal 20 receives a plurality of first reference signals in a cell and a second operation in which the user terminal 20 receives a plurality of second reference signals in the cell. The transmitting/receiving section 120 may transmit information indicating the one operation. The number of the plurality of second reference signals may be larger than the number of the plurality of first reference signals.

### (User Terminal)

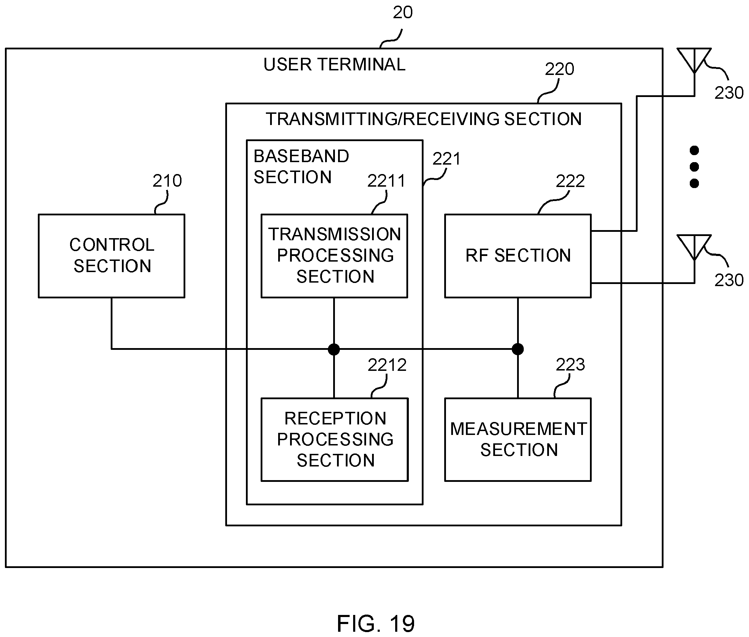

FIG. 19 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive one of a plurality of reference signals (for example, SSBs/CSI-RSs) transmitted by using respective different resources (for example, time resources / frequency resources / code resources / space resources) (for example, TDMed/FDMed/CDMed/SDMed). The control section 210 may control reception of two or more reference signals (for example, measurement-target SSBs/CSI-RSs, particular SSBs/CSI-RSs) among the plurality of reference signals, based on a result of the reception of the one reference signal. The number of the plurality of reference signals may be larger than 64.

The number of the plurality of reference signals may be divided into a plurality of groups. All the reference signals in the plurality of groups may be time-division-multiplexed.

The plurality of groups may correspond to a plurality of periods. The transmitting/receiving section 220 may receive the plurality of groups in the plurality of respective periods.

The transmitting/receiving section 220 may receive the plurality of groups in the same symbol.

The control section 210 may determine one operation from a plurality of operations including a first operation (for example, operation A) of receiving a plurality of first reference signals among a plurality of reference signals (for example, SSBs/CSI-RSs in a cell) and a second operation (for example, operation B) of receiving a plurality of second reference signals among the plurality of reference signals. The transmitting/receiving section 220 may receive at least one of the plurality of first reference signals and the plurality of second reference signals according to the one operation. The number of the plurality of second reference signals may be smaller than the number of the plurality of first reference signals.

The number of the plurality of reference signals may be divided into a plurality of groups. The plurality of second reference signals may correspond to one of the plurality of groups.

The control section 210 may determine the operation, based on received information.

The control section 210 may determine the one operation according to whether a condition is satisfied.

The control section 210 may determine one operation from a plurality of operations including a first operation of receiving a plurality of first reference signals (for example, group A, SSBs/CSI-RSs using wide beams) in a cell and a second operation of receiving a plurality of second reference signals (for example, group B, SSBs/CSI-RSs using narrow beams) in the cell. The transmitting/receiving section 220 may receive at least one of the plurality of first reference signals and the plurality of second reference signals according to the one operation. The number of the plurality of second reference signals may be larger than the number of the plurality of first reference signals.

The plurality of first reference signals may be a plurality of synchronization signal blocks in the cell.

The control section 210 may determine the operation, based on received information.

The control section 210 may determine the one operation according to whether a condition is satisfied.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

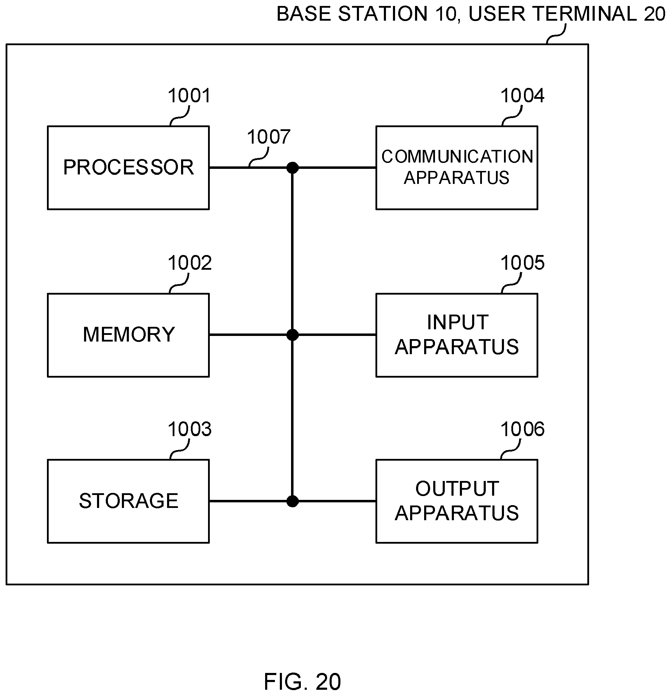

For example, a base station, a user terminal, and so on according to one embodiment of the present disclosure may function as a computer that executes the processes of the radio communication method of the present disclosure. FIG. 20 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings.

For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object refers to a mobile object, of which moving speed is any speed, and also includes, as a matter of course, a case in which the moving object is stationary. For example, the moving object includes, but is not limited to, a vehicle, a transport vehicle, an automobile, a motorcycle, a bicycle, a connected car, an excavator, a bulldozer, a wheel loader, a dump truck, a forklift, a train, a bus, a handcart, a rickshaw, a ship and other watercraft, an airplane, a rocket, an artificial satellite, a drone, a multicopter, a quadcopter, a hot air balloon, and an object loaded on these. The moving object may be a moving object that autonomously moves based on an operation command.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

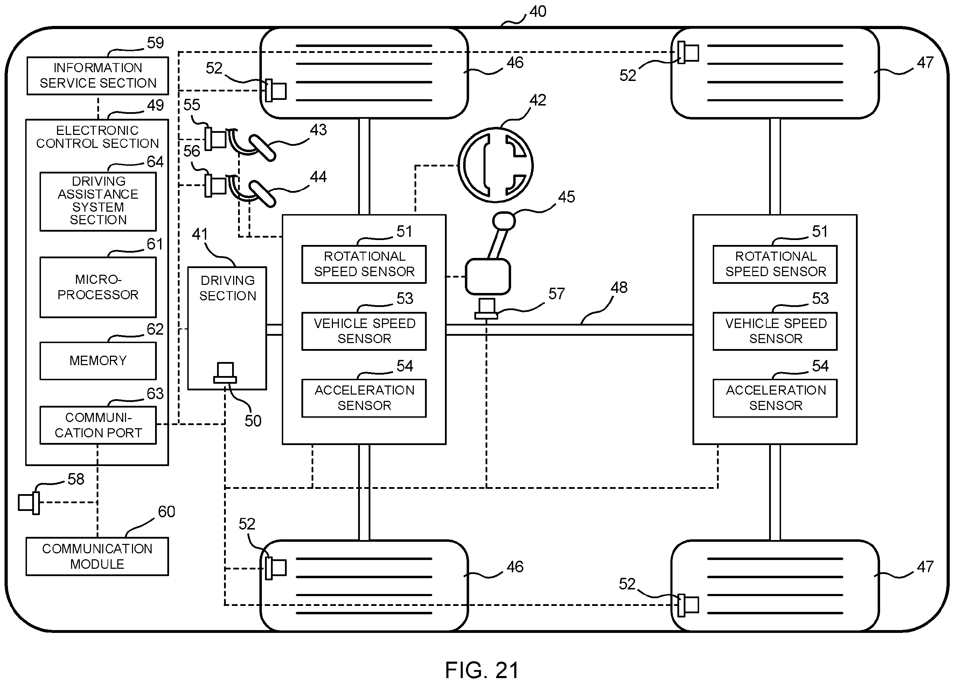

FIG. 21 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, am input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV)) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (where x is, for example, an integer or a decimal), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives one reference signal among a plurality of reference signals transmitted by using respective different resources; and
a control section that controls reception of two or more reference signals among the plurality of reference signals, based on a result of reception of the one reference signal, wherein
the number of the plurality of reference signals is larger than 64.

2. The terminal according to claim 1, wherein
the plurality of reference signals are divided into a plurality of groups, and
all reference signals in the plurality of groups are time-division-multiplexed.

3. The terminal according to claim 2, wherein
the plurality of groups correspond to a plurality of periods, and
the receiving section receives the plurality of groups in the plurality of respective periods.

4. The terminal according to claim 2, wherein
the receiving section receives the plurality of groups in the same symbol.

5. A radio communication method for a terminal, the radio communication method comprising:
receiving one reference signal among a plurality of reference signals transmitted by using respective different resources; and
controlling reception of two or more reference signals among the plurality of reference signals, based on a result of reception of the one reference signal, wherein
the number of the plurality of reference signals is larger than 64.

6. A base station comprising:
a transmitting section that transmits a plurality of reference signals by using respective different resources; and
a control section that controls association of one reference signal among the plurality of reference signals and two or more reference signals among the plurality of reference signals, wherein
the number of the plurality of reference signals is larger than 64.
